# EUROPÄISCHE PATENTSCHRIFT

(11) **EP 1 440 817 B1**
(45) Veröffentlichungstag und Bekanntmachung des Hinweises auf die Patenterteilung: **27.05.2009**
(21) Anmeldenummer: 04000586.0
(22) Anmeldetag: 14.01.2004
(51) Int. Cl.: B60B 17/00

(54) **Stabiles Eisenbahnrad**
Stable railway wheel
Roue stable de chemin de fer

(30) Priorität: 15.01.2003 CZ 20030120
(43) Veröffentlichungstag der Anmeldung: 28.07.2004
(73) Patentinhaber: Bonatrans A.S., 735 94 Bohumin (CZ)
(72) Erfinder: Zima, Radim, 735 11 Orlova-Mesto (CZ); Pavco, Jaromir, 735 31 Bohumin-Skrecon (CZ); Pavco, Petr, 735 31 Bohumin-Skrecon (CZ); Vampola, Vladimir, 735 43 Albrechtice (CZ)
(74) Vertreter: Kastner, Vaclav

(56) Entgegenhaltungen:
- EP-A- 1 225 065
- SU-A1- 1 090 586
- US-A- 5 333 926

## Beschreibung

### Gebiet der Technik

Die Lösung betrifft die Konstruktion eines Eisenbahnrades, das im Betrieb beim Bremsen durch mit der Klotzbremse entstehenden Wärme und durch die Radkräfte beansprucht wird, bei deren Kombination in der Konstruktion des Rades hohe Spannungswerte und Deformationen des Radkranzes entstehen.

### Bisheriger Stand der Technik

Eisenbahnräder bestehen aus drei Hauptteilen, aus der Radnabe, dem Radkranz und der Radplatte, die den Übergang zwischen der Radnabe und deren Radkranz bewirkt. Es sind Räder bekannt, die eine gerade Form der Radplatte haben, am meisten werden aber entlastene Räder mit verschieden durchgebogenen und geformten Platten benutzt, wobei die Form der Radplatte die Resistenz gegen die mechanische und thermische Belastung beeinflusst.

Die bisher verbreiteste Standardkonstruktion im ' Eisenbahnbetrieb ist das mit einem Tangentialprofil der Platte ausgestattete Rad, das sog. UIC-ORE-Rad. Dieses Rad ist gegen hohe Temperaturen im Radkranz beständig, nachteilig aber ist nach dem Abkühlen eine hohe Spannung im Radkranz und die Bildung von plastischen Deformationen in Folge einer niedrigen Elastizität, die die Verwendung von höheren Achsbeanspruchungen begrenzen, die dann besonders bei Rädern für die Eisenbahnlastwagen nicht genügend sind.

Deshalb wird der Entwicklung neuer Formen der Radplatte in der letzten Zeit ein hohes Augenmerk aller Hersteller von Eisenbahnrädern gewidmet und man spricht von optimalisierten Rädern. Es sollen solche Formen, Abmessungen und Lagen der Radplatte gefunden werden, die die axiale Verrückung, d.i. die Deformation des Radkranzes und das Spannungsniveau besonders wiederum im Radkranz reduzieren und dies wie im erwärmten Zustand, so auch im kalten Zustand nach dem Abkühlen im Betrieb. Damit steigt in Folge der Abmessungsstabilität der Spur des Radsatzes und der niedrigen Spannung in der Konstruktion die Sicherheit und Verlässlichkeit der Räder im Betrieb und diese Eigenschaften initiieren nicht das Bilden und Ausbreiten von Rissen, die zu katastrophalen Brüchen bei Betriebsbelastungen führen.

Zum Beispiel ist die Lösung des sog. Glockenrades gemäß dem Patent DE 3117572 bekannt, bei dem die Mittellinie der Radplatte, also deren Achse, eine mit einer Kosinusfunktion bestimmte regelmäßige Kurve bildet, die in der Praxis oft durch drei kongruente Halbmesserkrümmungen approximiert wird. Vorteil dieses Rades ist eine niedrigere Masse des Rades und nach einer Bremsung eine niedrigere residuale Spannung im Kranz nach dem Abkühlen. Bei höheren Radachsenlasten entsteht aber bei so einer Konstruktion des Rades in Folge der mechanischen Beanspruchung eine hohe effektive und radiale Spannung in der Radplatte und zum Erreichen einer geforderten Dauerwechselfestigkeit muss diese Konstruktion eine verstärkte Radplatte haben, aber verliert damit den Vorteil einer niedrigeren Masse und überdies verschlechtert sich das Niveau der residualen Tangentialspannungen im Radkranz zugleich mit dem Anstieg der axialen Verrückung des Radkranzes gegenüber seiner Nabe, was zu seiner Deformation führt.

Eine analogische Formlösung ist in der Anmeldung des Patentes EP 1 225 065 A1 oder im Patent CZ 292 087 beschrieben. Nachteilig an diesen Lösungen ist, dass die dort angeführten Formen nicht weiter so optimalisiert werden können, dass neben einer nennenswerten Einsparung der Radmasse gleichzeitig weitere Verbesserungen einiger Radparameter erreicht werden, wie besonders die Reduzierung der effektiven Spannungen, der Tangentialspannung im Radkranz, der axialen Verrückung des im Betrieb oder nach dem Bremsen erwärmten Kranzes und weiterhin die Reduzierung effektiver und radialer Spannungen in anderen Teilen des Rades außerhalb des Kranzbereiches.

### Wesen der Erfindung

Die angeführten Nachteile beseitigt im hohen Maße das stabile Eisenbahnrad, dessen Mittelebene sich senkrecht zur Rotationsachse des Rades erstreckt und das aus einer Radnabe, aus einem aus der Fahrfläche und dem Spurkranz gebildeten Radkranz und der Radplatte besteht, deren Querprofil entlang der theoretischen Mittellinie verläuft, die zwischen dem im Bereich des Anfanges des Radplattenüberganges in den Radkranz gelegenen ersten Punkt, den auf der entgegengesetzten Seite der Mittellinie als der Spurkranz gelegenen mittleren Punkten und dem letzten im Bereich des Anfanges des Radplattenüberganges in die Radnabe gelegenem Punkt verläuft, und deren Wesen darin besteht, dass die Mittellinie der Radplatte an der Stelle ihrer maximalen axialen Ablenkung ein gerader Abschnitt bildet, der in einer zur Rotationsachse des Rades senkrechten Ebene liegt, und der wie mit dem ersten Punkt der Mittellinie der Radplatte so auch mit ihrem letzten Punkt entweder mit zwei Krümmungen oder einer Kombination von Krümmungen und geraden Linienabschnitten verbunden ist.

Vorteilig ist eine Ausführung des Eisenbahnrades, bei der der erste Punkt und der letzte Punkt der Mittellinie der Radplatte in einer Mittelebene liegt, diese können aber jeder an einer anderen Seite der Mittelebene oder beide in der gleichen Seite der Mittelebene liegen.

Vorteilig ist eine Ausführung des Eisenbahnrades, bei der der erste Punkt und der letzte Punkt der Mittellinie des Rades in der Mittelebene und der entgegengesetzte dieser Punkte auf jeder beliebigen Seite der Mittelebene liegt.

Weiterhin ist vorteilig, wenn die axiale Ablenkung, also der Abstand zwischen der Ebene mit den mittleren Punkten der Mittellinie der Radplatte und der Mittelebene maximal gleich einem 0,35 Vielfachen der Breite des Radkranzes ist.

Die Krümmung eines Teiles der Mittellinie der Radplatte zwischen dem gradlinigem Abschnitt im Bereich der maximalen axialen Krümmung der Radplatte und den Punkten im Bereich der Anfänge der Übergänge der Radplatte in den Radkranz und in die Radnabe, bilden Kurven dritten Grades oder Kreisbogen.

Wenn der gradlinige Abschnitt im Bereich der maximalen axialen Krümmung der Mittellinie der Radplatte wie mit dem ersten Punkt so auch mit dem letzten Punkt der Mittellinie der Radplatte mittels zweier Krümmungen verbunden ist, dann wird als geeignet empfohlen, den Abschnitt vom im Bereich des Überganganfanges der Radplatte in den Radkranz gelegenen ersten Punkt der Mittellinie der Radplatte zum ersten mittleren Punkt der Mittellinie als eine Krümmung eines ersten äußeren Halbmessers der Krümmung und aus einer weiteren Krümmung als einen ersten inneren Halbmesser der Krümmung zusammenzusetzen, wobei in diesem Abschnitt der innere Halbmesser größer ist als der äußere Halbmesser und der Abschnitt vom letzten Punkt der Mittellinie der Radplatte im Bereich des Überganganfanges der Radplatte in die Radnabe zum zweiten mittleren Punkt der Mittellinie aus einer Krümmung mit dem zweiten äußeren Halbmesser der Krümmung und aus einer Krümmung mit dem zweiten innerem Halbmesser der Krümmung besteht, wobei der innere Halbmesser in diesem Abschnitt größer ist als der äußere Halbmesser. Um die besten Ergebnisse einer Unterdrückung der Deformationen zu erzielen, wird weiterhin empfohlen, die Mittellinie der Radplatte aus mit kongruenten Abmessungen zusammengesetzten zwei Paaren von Kurventeilen dritten Grades oder aus Kreisbogen zusammenzusetzen. Beide innere Krümmungsradien sollten die gleiche Größe und beide äußere Krümmungsradien ebenfalls die gleiche Größe haben, wobei in jedem der beiden Abschnitte der Mittellinie der Radplatte die Größe der Inneren Halbmesser das 1,5 bis 3,5 Vielfache der Größe der äußeren Halbmesser des gegebenen Abschnittes betragen.

Die Mittellinie verläuft dabei durch den Radkranz im Bereich des sogenannten Kontaktkreises, wo sich theoretisch die Fahrfläche mit der Mitte des Schienenkopfes berührt.

Es wird eine Radkonstruktion empfohlen, bei der der Abstand des ersten Punktes der Mittelinie der Radplatte von der Rotationsachse des Rades sich im Bereich des 0,7 bis 0,90 Vielfachen des äußeren Halbmessers des Eisenbahnrades und bei der der Abstand des letzten Punktes der Mittellinie der Radplatte von der Rotationsachse des Rades im Bereich des 0.3 bis 0,45 Vielfachen des äußerem Halbmessers des Rades bewegt.

Vorteilhaft ist auch eine Ausführung des Eisenbahnrades, bei der die Mittelinie der Radplatte zwischen dem gradlinigem Abschnitt im Bereich der maximalen axialen Ablenkung und den Punkten im Bereich der Übergangsanfänge der Radplatte in den Radkranz und in die Radnabe durch eine Kombination von Kreisbogen oder Kurven des dritten Grades und gradlinigen Abschnitten gebildet wird. Die gradlinigen Abschnitte beginnen dabei im ersten und im letzten Punkt der Mittellinie der Radplatte und gehen mit einer Krümmung in den mittleren geraden Abschnitt der Mittellinie der Radplatte über.

Auch eine weitere Ausführung des Eisenbahnrades ist vorteilhaft, bei der die Dicke der Radplatte entlang der Mittellinie der Radplatte vom ersten Punkt der Mittellinie bis zum Bereich der maximalen axialen Ablenkung konstant ist, und konstant ist sie ebenfalls im geraden Abschnitt in ihrem mittleren Teil und weiter in der Richtung zum letzten Punkt der Mittellinie verstärkt sie sich gleichmäßig oder gegebenenfalls gemäß einer Kurve des zweiten oder dritten Grades.

Vorteilig ist bei diesem Eisenbahnrad seine kleine Masse, wobei es gute Eigenschaften im erwärmten Zustand hat, was niedrige Werte der effektiven und radialen Spannungen und der tangentialen Spannungen im Kranz sind, und auch niedrige Werte der axialen Verrückung des Radkranzes. Vorteilhaft ist weiterhin, dass diese Konstruktion im abgekühlten Zustand, beim Einhalten der Parameter der übrigen schon früher bekannten und beschrieben Lösungen, niedrigere effektive und radiale Spannungen aufweist.

Diese Radkonstruktion ist besonders für Eisenbahnlastwagen geeignet, kann aber vorteilhaft auch für alle Schienenfahrzeuge mit durch Wärme und Kräfte beanspruchten Rädern benutzt werden, einschließlich der Triebwagen und Lokomotiven.

Das Rad kann aus allen bei der Eisenbahn benutzen Stahlqualitäten nach bekannten technischen Normen, durch Walzen, Schmieden gegebenenfalls Abgießen, hergestellt werden. Beim Bremsen mit der Klotzbremse kann das Rad wiederholt Bremsperioden mit einer Leistung von 55 kW und Dauer von 45 Minuten, ohne negativen Folgen einer Radkranzdeformation und Anstieg tangentialer Zugspannungen im Radkranz beim Abkühlen des Radkranzes nach der durch Bremsen oder in Folge des Betriebes hervorgerufenen Erwärmung, absorbieren. Es entstehen nicht Änderungen der Spurweite oder Spur des Radsatzes und deshalb erhöht sich die Verkehrsicherheit beim Durchfahren von Weichen und Kreuzungen und verringert sich die Möglichkeit einer Entgleisung der Eisenbahnwagen.

### Übersicht der Zeichnungsfiguren

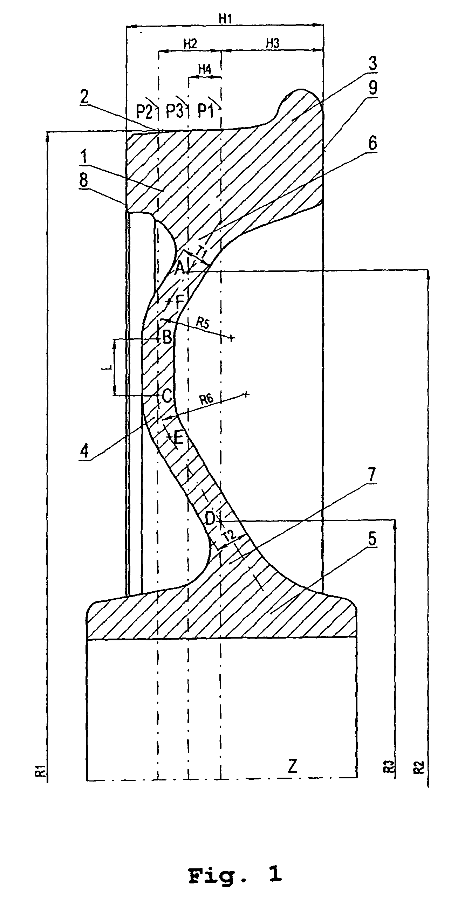

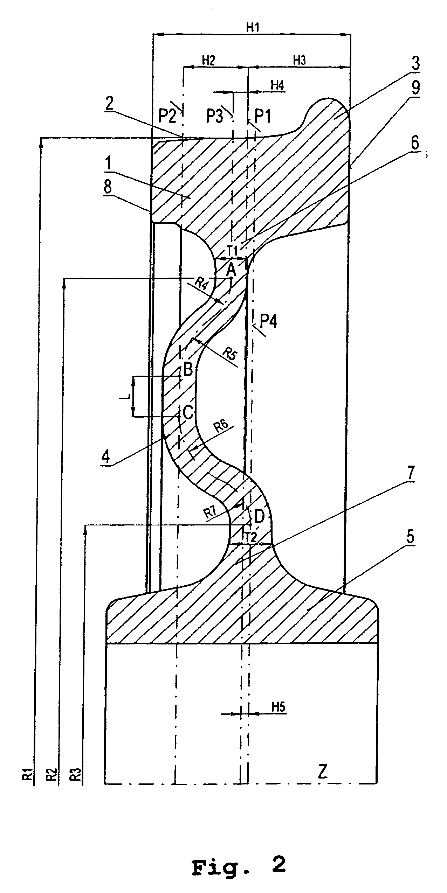

In den Figuren 1 und 2 sind im Querschnitt einige der möglichen Ausführungen immer einer Hälfte des Eisenbahnrades dargestellt.

### Ausführungsbeispiele des Patentes

### Beispiel 1

Das Eisenbahnrad nach Fig. 1 hat einen Außenradius R1 und besteht aus einem Radkranz 1 mit der Fahrfläche 2 und dem Spurkranz 3, aus der Radplatte 4 und der Radnabe 5, aus dem Übergang 6 der Radplatte 4 in den Radkranz 1 und aus dem Übergang 7 der Radplatte 4 in die Radnabe 5. Der Radkranz ist mit einer äußeren Kante 8 und einer inneren Kante 9 begrenzt und hat eine Breite von H1. Auf der Mittellinie der Radplatte befinden sich der Punkt A im Bereiche des Überganganfanges 6 der Radplatte 4 in den Radkranz 1, die mittleren Punkte BC im Bereich der maximalen axialen Ablenkung und der letzte Punkt D im Bereich des Überganganfanges 7 der Radplatte 4 in die Radnabe 5. Der erste Punkt A der Mittellinie der Radplatte 4 liegt in der Ebene P3, die sich senkrecht zur Rotationsachse Z des Rades erstreckt, und ist gegenüber der Mittelebene P1 zur äußeren Kante 8 des Radkranzes 1 um den Abstand H4 verschoben und der letzte Punkt D der Mittellinie der Radplatte liegt in der Mittelebene P1, die sich senkrecht zur Rotationsachse Z des Rades erstreckt und von der inneren Kante 9 des Rades einen Abstand von H3 hat. Im Bereich seiner maximalen axialen Ablenkung bildet die Mittellinie der Radplatte 4 den gradlinigen mittleren Abschnitt BC, was ein L langer, gerader Abschnitt ist, der in der Ebene P2 liegt, die sich senkrecht zur Rotationsachse Z des Rades erstreckt und von der Mittelebene P1 in Richtung zur äußeren Kante 8 des Radkranzes 1 um den Abstand H2, der dem maximalen 0,35 Vielfachen der Breite H1 des Radkranzes 1 gleicht, verschoben ist. Ein Teil der Mittellinie der Radplatte 4, zwischen dem Punkt A im Bereich des Überganges 6 der Radplatte 4 in den Radkranz 1 und dem mittleren Punkt B, besteht aus einem gradlinigen Abschnitt AF und einem Kreisbogen FB mit dem Halbmesser R5. Ein Teil der Mittellinie der Radplatte 4 zwischen dem letzten Punkt D im Bereich des Überganges 7 der Radplatte 4 in die Radnabe 5 und dem mittleren Punkt C besteht aus einem gradlinigen Abschnitt DE und aus einem Kreisbogen EC mit dem Halbmesser R6. Der erste Punkt A der Mittellinie der Radplatte 4 liegt auf dem Halbmesser R2, der das 0,8 Vielfache des äußeren Halbmessers R1 des Rades beträgt und der letzte Punkt D der Mittellinie der Radplatte 4 liegt auf dem Halbmesser R3, der das 0,4 Vielfache des äußeren Halbmessers R1 des Rades beträgt. Die Radplatte 4 hat im Abschnitt DB eine konstante Dicke T2, vom Punkt B verringert sich diese gleichmäßig über den Punkt F bis in den ersten Punkt A, wo die Radplatte eine Dicke von T1 hat.

### Beispiel 2.

Das Eisenbahnrad nach Fig. 2 hat einen Außenradius R1 und besteht aus einem Radkranz 1 mit der Fahrfläche 2 und dem Spurkranz 3, aus der Radplatte 4 und der Radnabe 5, aus dem Übergang 6 der Radplatte 4 in den Radkranz 1 und aus dem Übergang 7 der Radplatte 4 in die Radnabe 5. Den Radkranz begrenzt eine äußeren Kante 8 und einer inneren Kante 9 und seine Breite beträgt H1. Auf der Mittellinie der Radplatte befinden sich der Punkt A im Bereiche des Überganganfanges 6 der Radplatte 4 in den Radkranz 1, die mittleren Punkte BC befinden sich im Bereich der maximalen axialen Ablenkung und der letzte Punkt D im Bereich des Überganganfanges 7 der Radplatte 4 in die Radnabe 5. Durch den Radkranz 1 geht die Mittelebene P1 hindurch, die sich senkrecht zur Rotationsachse Z des Rades erstreckt und die in einem Abstand von H3 von der Innenkante 9 des Radkrances 1 liegt. Der erste Punkt A der Mittellinie der Radplatte 4 liegt in der Ebene P3, die sich senkrecht zur Rotationsachse Z des Rades erstreckt, und ist gegenüber der Mittelebene, P1 zur äußeren Kante 8 des Radkranzes 1 um den Abstand H4 verschoben und der letzte Punkt D der Mittellinie der Radplatte liegt in der Ebene P4, die sich senkrecht zur Rotationsachse Z des Rades erstreckt und ist gegenüber der ebene P1 in der Richtung zur Innenkante 9 des Radkranzes 1 um den Abstand H5 verschoben. Im Bereich ihrer maximalen axialen Ablenkung bildet die Mittellinie der Radplatte 4 den gradlinigen mittleren Abschnitt BC, was ein L langer, gerader Abschnitt ist, der in der Ebene P2 liegt, die sich senkrecht zur Rotationsachse Z des Rades erstreckt und von der Mittelebene P1 in Richtung zur äußeren Kante 8 des Radkranzes 1 um den Abstand H2, der dem maximalen 0,35 Vielfachen der Breite H1 des Radkranzes 1 gleicht, verschoben ist. Ein Teil der Mittellinie der Radplatte 4, zwischen dem Punkt A im Bereich des Überganges 6 der Radplatte 4 in den Radkranz 1 und dem mittleren Punkt B, besteht aus einem Kreisbogen mit einem ersten Außenradius R4 und einem Kreisbogen mit dem ersten Innenradius R5. Ein Teil der Mittellinie der Radplatte 4 zwischen dem letzten Punkt D im Bereich des Überganges 7 der Radplatte 4 in die Radnabe 5 und dem mittleren Punkt C besteht aus einem Kreisbogen mit einem zweiten Außenradius R7 und einem Kreisbogen mit einem zweiten Innenradius R6. Die Innenradien R5, R6 haben die gleiche Größe und sind größer als die kongruenten Außenradien R4 und R7. Der erste Punkt A der Mittellinie der Radplatte 4 liegt auf dem Halbmesser R2, der das 0,8 Vielfache des äußeren Halbmessers R1 des Rades beträgt und der letzte Punkt D der Mittellinie der Radplatte 4 liegt auf dem Halbmesser R3, der das 0,4 Vielfache des äußeren Halbmessers R1 des Rades beträgt. Die Radplatte hat im Bereich vom ersten Punkt A zum mittleren Punkt C eine konstante Dicke T1 und vom Punkt C zum Punkt D vergrößert sich diese gleichmäßig bis zu einer Dicke von T2 im Punkt D.

### Gewerbliche Anwendbarkeit

Ein stabiles Eisenbahnrad mit minimalisierten Spannungen und Deformationen kann bei allen auf der Fahrfläche mit Bremsklotzen gebremsten oder anders wärmebeanspruchten Rädern der Schienenfahrzeuge benutzt werden, besonders aber kann es bei Eisenbahnlastwagen, Triebwagen und Lokomotiven angewendet werden. In Hinsicht auf die gute radiale Nachgiebigkeit mit genügender Dauerwechselfestigkeit im kritischen Bereich des Rades, im Übergang der Radplatte in die Radnabe, kann man diese Radkonstruktion auch für Eisenbahnwagen benutzen, bei denen nicht eine Klotzbremse, sondern selbständige Bremsscheiben, wie z.B. für Personenwagenbremsen, benutzt werden.

## Patentansprüche

1. Stabiles Eisenbahnrad mit einer Mittelebene (P1), die sich senkrecht zur Rotationsachse (Z) des Rades erstreckt, das aus der Radnabe (5), dem durch die Fahrfläche (2) und dem Spurkranz (3)gebildeten Radkranz (1) und aus der Radplatte (4) zusammengesetzt ist, deren Querprofil sich entlang der theoretischen Mittellinie befindet, die zwischen dem im Bereich des Überganganfanges (6) der Radplatte (4) liegendem ersten Punkt (A), den auf der entgegengesetzten Seite der Mittelebene (P1) als der Spurkranz (3) sich befindenden mittleren Punkten (B,C) und dem im Bereich des Überganganfanges (7) der Radplatte in die Radnabe (5) letzten Punkt (D) verläuft, **dadurch gekennzeichnet, dass** die Mittellinie der Radplatte (4) im Bereich ihrer maximalen axialen Ablenkung aus einem gradlinigen Abschnitt (BC) besteht, der in der zur Rotationsachse (Z) senkrechten Ebene (P2) verläuft und der wie mit dem ersten Punkt (A) der Mittellinie der Radplatte (4) so auch mit ihrem letzten Punkt (D) entweder mittels zweier Krümmungen oder einer Kombination von Krümmungen und gradlinigen Abschnitten verbunden ist.

2. Eisenbahnrad nach Anspruch 1, **dadurch gekennzeichnet, dass** sich der erste Punkt (A) und der letzte Punkt (D) der Mittellinie der Radplatte (4) in der Mittelebene (P1) befinden.

3. Eisenbahnrad nach Anspruch 1,**dadurch gekennzeichnet, dass** sich der erste Punkt (A) und der letzte Punkt (D) der Mittellinie der Radplatte (4) jeder auf einer anderen Seite der Mittelebene (P1) befinden.

4. Eisenbahnrad nach Anspruch 1,**dadurch gekennzeichnet, dass** sich der erste Punkt (A) und der letzte Punkt (D) der Mittellinie der Radplatte (4) auf der gleichen Seite der Mittelebene (P1) befinden.

5. Eisenbahnrad nach Anspruch 1,**dadurch gekennzeichnet, dass** sich der erste Punkt (A) und der letzte Punkt (D) der Mittellinie der Radplatte (4) in der Mittelebene (P1) befinden und der entgegengesetze dieser Punkte sich auf jeder beliebigen Seite der Mittelebene (P1) befindet.

6. Eisenbahnrad nach den Ansprüchen 1 bis 5, **dadurch gekennzeichnet, dass** der Abstand (H2) zwischen der Mittelebene (P1) und der Ebene (P2) maximal das 0,35 Vielfache der Breite (H1) des Radkranzes (1) beträgt.

## Claims

1. A stable railway wheel with a median plane (P1), which is positioned perpendicularly to the rotation axis (Z) of the wheel, which wheel comprises a wheel hub (5), a wheel rim (1) formed by a driving surface (2) and a wheel flange (3), and a wheel plate (4) having its cross-section located along the theoretical midline, which midline is positioned between a first point (A) lying in the area of the transitional beginning (6) of the wheel plate (4), midpoints (B, C) situated on the opposite side of the median plane (P1) than the wheel flange (3), and a last point (D) in the area of the transition beginning (7) of the wheel plate into the wheel hub (5), **characterized in that** in said field of its maximum axial deflection said midline of said wheel plate (4) is from a straight section (BC), which section (BC) is positioned in a plane (P2) being perpendicular to a rotation axis (Z), and which is connected both with said first point (A) of said midline of said wheel plate (4) and with its last point (D) either by means of two curvatures or by means of a combination of curvatures and straight sections.

2. Railway wheel according to claim 1, **characterized in that** said first point (A) and said last point (D) of said midline of said wheel plate (4) are located in said median plane (P1).

3. Railway wheel according to claim 1, **characterized in that** said first point (A) and said last point (D) of said midline of said wheel plate (4) are each located on an opposite side of said median plane (P1).

4. Railway wheel according to claim 1, **characterized in that** said first point (A) and said last point (D) of said midline of said wheel plate (4) are located on the same side of said median plane (P1).

5. Railway wheel according to claim 1, **characterized in that** said first point (A) and said last point (D) of said midline of said wheel plate (4) are located in said median plane (P1) and the opposite of these points is located on any side of said median plane (P1).

6. Railway wheel according to claims 1 to 5, **characterized in that** the distance (H2) between said median plane (P1) and said plane (P2) amounts to the 0.35 multiple of the width (H1) of said wheel rim (1) maximally.

## Revendications

1. Roue ferroviaire présentant un plan (P1) médian perpendiculaire à l'axe (Z) de rotation de roue, cette roue comportant une couronne (1) de la roue definissant une surface (2) de roulement et un boudin (3), et une plaque (4) de roue dont le profil transversal étant situé le long de la médian théorique s'étendant entre le premier point (A) situé à l'endroit du début de raccordement (6) de la plaque (4) de roue à la couronne (1) de roue, les points (B, C) centrals situés dans un plan (P1) central du côté opposé au boudin (3) et le dernier point (D) situé à l'endroit du début de raccordement (7) de la plaque (4) de roue au moyeu (5) de roue, **caractérisée en ce que**, la médiane de la plaque (4) est dans l' endroit de sa flexion maximale axiale formée par une section (BC) directe situeé dans un plan normal à l'axe (Z) de rotation de roue et liée d'une part avec le premier point (A) de la médiane de la plaque (A) et d'autre part avec son dernier point (D) soit par deux courbures, soit par la combinaison des courbures et des sestions directes.

2. Roue ferroviaire selon la revendication 1, **caractérisée en ce que** le premier point (A) et le dernier point (D) de la médiane de la plaque (4) de roue se trouvent dans un plan (P1) central.

3. Roue ferroviaire selon la revendication 1, **caractérisée en ce que** le premier point (A) et le dernier point (D) de la médiane de la plaque (4) de roue se trouvent chaqun dans un autre côté du plan (P1) central.

4. Roue ferroviaire selon la revendication 1, **caractérisée en ce que** le premier point (A) et aussi le dernier point (D) de la médiane de la plaque (4) de roue se trouvent dans le même côté du plan (P1) central.

5. Roue ferroviaire selon la revendication 1, **caractérisée en ce que** le premier point (A) ou le dernier point (D) de la médiane de la plaque (4) de roue se trouve dans un plan (P1) central et celui opposé de ces points se trouve dans n'importe quel côté du plan (P1) central.

6. Roue ferroviaire selon l'une quelconque des revendications 1 à 5, **caractérisée en ce que** la distance (H2) entre le plan (P1) central et le plan (P2) est égale au maximum à 0,35 fois de la largeur (H1) de la couronne (1) de roue.
